# EUROPÄISCHE PATENTSCHRIFT

(11) **EP 3 167 699 B1**
(45) Veröffentlichungstag und Bekanntmachung des Hinweises auf die Patenterteilung: **15.02.2023**
(21) Anmeldenummer: 16194578.7
(22) Anmeldetag: 19.10.2016
(51) Int. Cl.: G05D 1/02, A01D 34/00

(54) **AUTONOMES ARBEITSGERÄT**
AUTONOMOUS WORK DEVICE
ENGIN DE TRAVAIL AUTONOME

(30) Priorität: 13.11.2015 DE 102015222390
(43) Veröffentlichungstag der Anmeldung: 17.05.2017
(73) Patentinhaber: Robert Bosch GmbH, 70442 Stuttgart (DE)
(72) Erfinder: Biber, Peter, 72119 Poltringen (DE); Sparbert, Jan, 71277 Rutesheim (DE)

(56) Entgegenhaltungen:
- WO-A1-2015/094052
- WO-A1-2016/097900
- DE-A1-102007 060 056

## Beschreibung

### Stand der Technik

Es ist bereits ein autonomes Arbeitsgerät, insbesondere ein autonomer Rasenmäher, mit zumindest einer Erfassungsvorrichtung, welche zu einer Erfassung eines mittels zumindest einer temporären Markiervorrichtung initial zumindest annähernd definierten Arbeitsbereichs vorgesehen ist, und mit zumindest einer Steuer- und/oder Regeleinheit, welche zu einer zumindest teilweisen Kartierung des Arbeitsbereichs vorgesehen ist, vorgeschlagen worden.

Zudem wird auf die Druckschrift DE 10 2007 060 056 A1 verwiesen, die den Oberbegriff des Anspruchs 1 offenbart, sowie die Druckschrift WO 2016/097900 A1.

### Offenbarung der Erfindung

Die Erfindung betrifft ein autonomes Arbeitsgerät mit den Merkmalen des Anspruchs 1. Vorteilhafte Weiterbildungen ergeben sich aus den abhängigen Ansprüchen.

Vorzugsweise wird der Arbeitsbereich initial zumindest annähernd mittels einer Vielzahl von temporären Markiervorrichtungen definiert. Bevorzugt navigiert das autonome Arbeitsgerät in einer regulären Betriebsphase frei von temporären Markiervorrichtungen. Besonders bevorzugt kann die zumindest eine temporäre Markiervorrichtung vor einer regulären Betriebsphase entfernt werden. Vorzugsweise ist die zumindest eine temporäre Markiervorrichtung als eine temporäre Landmarke ausgebildet. Grundsätzlich wäre auch eine andere, einem Fachmann als sinnvoll erscheinende Ausbildung der temporären Markiervorrichtung denkbar. Alternativ wäre auch denkbar, dass die temporäre Markiervorrichtung als ein temporärer Markierschaum ausgebildet ist, welcher insbesondere von einem Bediener als Spray entlang der Grenze des Arbeitsbereichs aufgebracht werden kann. Unter einem "autonomen Arbeitsgerät" soll hier insbesondere ein Gerät verstanden werden, das sich selbsttätig in einem Bereich und/oder in einer Umgebung fortbewegt, orientiert oder navigiert, insbesondere sich nach einem Anlernprozess selbsttätig in einem Bereich und/oder in einer Umgebung fortbewegt und/oder sich orientiert. Der Ausdruck "selbsttätig fortbewegen und/oder orientieren" soll hier insbesondere eine Fortbewegung, eine Orientierung und/oder Navigation des Arbeitsgeräts, insbesondere nach einem Anlernprozess, ohne einen menschlichen Eingriff definieren. Vorzugsweise bewegt sich das autonome Arbeitsgerät nach einem von einem Bediener mit dem autonomen Arbeitsgerät durchgeführten Anlernprozess selbsttätig in einem Bereich und/oder in einer Umgebung fort bzw. orientiert sich selbsttätig in einem Bereich und/oder in einer Umgebung. Das Arbeitsgerät kann hierbei als autonomer Rasenmäher, als autonomer Staubsauger, als autonome Kehrmaschine, als autonomes Transportfahrzeug, als autonomes Fluggerät, als autonomes Agrargerät o. dgl. ausgebildet sein. Bevorzugt ist das autonome Arbeitsgerät als autonomer Rasenmäher ausgebildet, der dazu vorgesehen ist, eine als Rasenfläche ausgebildete Arbeitsfläche und/oder eine als Gartenumgebung ausgebildete Arbeitsumgebung abzufahren und/oder zu bearbeiten. Hierzu weist das autonome Arbeitsgerät besonders bevorzugt eine als Mähwerkeinheit ausgebildete Arbeitsflächenbearbeitungseinheit auf. Die Arbeitsflächenbearbeitungseinheit kann hierbei mittels einer Antriebseinheit, die zumindest zu einem Antrieb einer Fahrwerkseinheit des autonomen Arbeitsgeräts vorgesehen ist, oder mittels einer separaten Mähwerkantriebseinheit, die getrennt von der Antriebseinheit zum Antrieb der Fahrwerkseinheit ausgebildet ist, angetrieben werden.

Ferner soll in diesem Zusammenhang unter einer "Erfassungsvorrichtung" insbesondere eine Vorrichtung verstanden werden, welche zu einer Erfassung zumindest einer Kenngröße eines Arbeitsbereichs vorgesehen ist. Vorzugsweise soll darunter insbesondere eine Vorrichtung verstanden werden, die dazu vorgesehen ist, zumindest eine Kenngröße, welche zu einer Definition des Arbeitsbereichs dient, während einer initialen Definition des Arbeitsbereichs zu erfassen. Bevorzugt soll darunter insbesondere eine Vorrichtung verstanden werden, welche zu einer Erfassung eines Lage- und/oder Formparameters des Arbeitsbereichs vorgesehen ist. Besonders bevorzugt soll darunter insbesondere eine Vorrichtung verstanden werden, die zu einer Erfassung einer insbesondere von einem Bediener vorgegebene Grenze und/oder eines Grenzpunktes des Arbeitsbereichs vorgesehen ist. Vorzugsweise weist die Erfassungsvorrichtung dazu insbesondere eine Sensoreinheit auf. Besonders bevorzugt ist die Erfassungsvorrichtung zu einer Arbeitsbereichserfassung vorgesehen. Dabei soll unter einer "Arbeitsbereichserfassung" insbesondere ein Vorgang verstanden werden, bei dem ein Arbeitsbereich des autonomen Arbeitsgeräts zumindest teilweise erkannt wird. Vorzugsweise soll darunter insbesondere ein Vorgang verstanden werden, bei dem ein Arbeitsbereich insbesondere virtuell erfasst wird. Besonders bevorzugt soll darunter insbesondere ein Vorgang verstanden werden, bei dem ein Arbeitsbereich zumindest zweidimensional erfasst und insbesondere eine Grenze des Arbeitsbereichs festgelegt wird. Dabei soll unter einem "Arbeitsbereich" insbesondere ein Bereich verstanden werden, der eine von dem autonomen Arbeitsgerät zu bearbeitende Fläche definiert. Vorzugsweise ist der Arbeitsbereich von einer zu mähenden Rasenfläche gebildet. Unter "vorgesehen" soll speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Unter einer "temporären Markiervorrichtung" soll in diesem Zusammenhang insbesondere eine Vorrichtung verstanden werden, die in zumindest einem Betriebszustand dazu vorgesehen ist, zumindest einen Teilbereich des temporären Arbeitsbereichs des autonomen Arbeitsgeräts zu definieren. Vorzugsweise soll darunter insbesondere eine Vorrichtung verstanden werden, die dazu vorgesehen ist, einen Arbeitsbereich des autonomen Arbeitsgeräts in zumindest einem Teilbereich zu begrenzen. Bevorzugt soll darunter insbesondere eine Vorrichtung verstanden werden, mittels der ein Bediener zumindest teilweise eine Grenze des temporären Arbeitsbereichs definieren kann. Besonders bevorzugt soll darunter eine Vorrichtung verstanden werden, welche zusammen mit einer Vielzahl identischer und/oder verschiedener temporärer Markiervorrichtungen eine Grenze des temporären Arbeitsbereichs definiert. Insbesondere soll darunter eine portable Vorrichtung verstanden werden, die bevorzugt unabhängig von einer dauerhaften Spannungsquelle betrieben werden kann. Es sind verschiedene, einem Fachmann als sinnvoll erscheinende Ausgestaltungen der temporären Markiervorrichtung denkbar. Vorzugsweise ist die temporäre Markiervorrichtung jedoch als eine Landmarke, insbesondere als eine von einem Erdspieß gebildete Landmarke, ausgebildet. Es sind jedoch auch andere Ausbildungen der temporären Markiervorrichtung, wie beispielsweise als ein Schaum, denkbar.

Des Weiteren soll unter einer "Steuer- und/oder Regeleinheit" insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden. Das Betriebsprogramm ist hierbei vorzugsweise zu einer Kartierung eines den temporären Arbeitsbereich zumindest im Wesentlichen aufweisenden absoluten Arbeitsbereichs vorgesehen. Unter einer "Kartierung" soll in diesem Zusammenhang insbesondere das Hinterlegen von Grenzdaten und/oder Flächendaten des Arbeitsbereichs verstanden werden. Vorzugsweise soll darunter insbesondere eine zumindest teilweise Erstellung einer virtuellen Karte des Arbeitsbereichs verstanden werden. Dabei soll unter einer "Karte" insbesondere eine, vorzugsweise digitale, Darstellung eines Bereichs und/oder einer Umgebung des Arbeitsbereichs verstanden werden. Vorzugsweise soll darunter insbesondere eine topographische Karte verstanden werden, die insbesondere Informationen zu Höhen, Maßstab, Untergrundbeschaffenheiten und/oder möglichen Hindernissen des Arbeitsbereichs umfasst. Grundsätzlich wäre jedoch auch denkbar, dass bei der Kartierung lediglich Navigationsdaten hinterlegt werden, welche für eine Bearbeitung des Arbeitsbereichs angewendet werden können.

Darunter, dass "die Steuer- und/oder Regeleinheit das autonome Arbeitsgerät unabhängig von der zumindest einen temporären Markiervorrichtung und abhängig von einem kartierten Arbeitsbereich navigiert" soll in diesem Zusammenhang insbesondere verstanden werden, dass die Steuer- und/oder Regeleinheit in der regulären Betriebsphase frei von der zumindest einen temporären Markiervorrichtung navigieren kann. Vorzugsweise können die temporären Markiervorrichtungen daher vor einer regulären Betriebsphase von dem Arbeitsbereich entfernt werden. Bevorzugt soll darunter insbesondere verstanden werden, dass eine reguläre Navigation anhand des kartierten Arbeitsbereichs, sowie einer bekannten Position des autonomen Arbeitsgeräts innerhalb des kartierten Arbeitsbereichs erfolgt. Grundsätzlich ist jedoch denkbar, dass die zumindest eine temporäre Markiervorrichtung dazu verwendet wird, kurzzeitig einen Bereich des Arbeitsbereichs abzusperren und von einem Arbeitsbereich auszunehmen, wie beispielsweise bei temporär wachsenden Blumen, Baustellen innerhalb des Arbeitsbereichs oder dergleichen. Ferner ist auch denkbar, dass die zumindest eine temporäre Markiervorrichtung dazu verwendet wird, einen Arbeitsbereich zu verändern.

Für diese Zwecke wird die zumindest eine temporäre Markiervorrichtung vorzugsweise von dem autonomen Arbeitsgerät erfasst, wobei die zumindest eine temporäre Markiervorrichtung für eine reguläre Navigation nicht von dem autonomen Arbeitsgerät erfasst wird.

Durch die erfindungsgemäße Ausgestaltung des autonomen Arbeitsgeräts kann vorteilhaft während eines regulären Betriebs auf temporäre Markiervorrichtungen verzichtet werden. Insbesondere kann dadurch vorteilhaft ein Betrieb des autonomen Arbeitsgeräts ohne störende temporäre Markiervorrichtungen gewährleistet werden. Ferner kann dadurch erreicht werden, dass lediglich für eine Einlernphase temporäre Markiervorrichtungen benötigt werden. Zudem kann erreicht werden, dass die temporären Markiervorrichtungen vor dauerhaften Witterungseinflüssen geschützt sind. Des Weiteren kann so vorteilhaft auf dauerhafte Markiervorrichtungen verzichtet werden. Dagegen kann für Bediener ein intuitives Definieren des Arbeitsbereichs durch schnelles, sichtbares Stecken der temporären Markiervorrichtungen erreicht werden.

Erfindungsgemäß ist vorgesehen, dass die zumindest eine Erfassungsvorrichtung zumindest eine Sensoreinheit aufweist, die zu einer Erfassung zumindest einer Kenngröße der zumindest einen temporären Markiervorrichtung vorgesehen ist. Vorzugsweise ist die zumindest eine Sensoreinheit zu einer Erfassung zumindest zwei verschiedener Kenngrößen der zumindest einen temporären Markiervorrichtung vorgesehen. Unter einer "Sensoreinheit" soll in diesem Zusammenhang insbesondere eine Einheit verstanden werden, die dazu vorgesehen ist, zumindest eine Kenngröße und/oder eine physikalische Eigenschaft aufzunehmen, wobei die Aufnahme aktiv, wie insbesondere durch Erzeugen und Aussenden eines elektrischen Messsignals, und/oder passiv, wie insbesondere durch eine Erfassung von Eigenschaftsänderungen eines Sensorbauteils, stattfinden kann. Es sind verschiedene, einem Fachmann als sinnvoll erscheinende Sensoreinheiten denkbar. Ferner soll in diesem Zusammenhang unter einer "Kenngröβe der zumindest einen temporären Markiervorrichtung" eine Kenngröße verstanden werden, welche zumindest eine spezifische Information der zumindest einen temporären Markiervorrichtung wiedergibt. Erfindungsgemäß wird darunter eine Kenngröße des Types der temporären Markiervorrichtung verstanden. Vorzugsweise soll ferner darunter eine Kenngröße einer aktuellen Position der temporären Markiervorrichtung relativ zu der Sensoreinheit verstanden werden. Grundsätzlich sind jedoch auch andere, einem Fachmann als sinnvoll erscheinende Kenngrößen denkbar. Dadurch kann insbesondere eine vorteilhafte Erfassung der temporären Markiervorrichtung erreicht werden. Insbesondere kann dadurch vorteilhaft erreicht werden, dass verschiedene Kenngrößen der temporären Markiervorrichtung erfasst werden. Hierdurch kann eine große Variabilität erreicht werden.

Des Weiteren wird vorgeschlagen, dass die zumindest eine Steuer- und/oder Regeleinheit dazu vorgesehen ist, den Arbeitsbereich abhängig von der zumindest einen erfassten Kenngröße der zumindest einen temporären Markiervorrichtung zu kartieren. Vorzugsweise ist die zumindest eine Steuer- und/oder Regeleinheit dazu vorgesehen, den Arbeitsbereich abhängig von einer erfassten relativen Position und/oder abhängig von einem erfassten Typ der zumindest einen temporären Markiervorrichtung zu kartieren. Besonders bevorzugt ist die zumindest eine Steuer- und/oder Regeleinheit dazu vorgesehen, den Arbeitsbereich abhängig von einer erfassten relativen Position und einem erfassten Typ der zumindest einen temporären Markiervorrichtung zu kartieren. Dabei soll unter einem "Typ der zumindest einen temporären Markiervorrichtung" insbesondere eine Art der temporären Markiervorrichtung verstanden werden, in welcher die temporäre Markiervorrichtung zumindest einen Teilbereich des Arbeitsbereichs definiert. Erfindungsgemäß kann ein Bediener bei einer Definition des Arbeitsbereichs verschiedene Typen von temporären Markiervorrichtungen verwenden, wobei die verschiedenen Typen von temporären Markiervorrichtungen jeweils für die Definition verschiedener Teilbereiche des Arbeitsbereichs vorgesehen sind. Dadurch kann insbesondere eine vorteilhaft zuverlässige und genaue Kartierung des Arbeitsbereichs erreicht werden. Insbesondere kann dadurch vorteilhaft eine Definition des Arbeitsbereichs mittels der zumindest einen temporären Markiervorrichtung erfolgen.

Es wird ferner vorgeschlagen, dass die zumindest eine Erfassungsvorrichtung zumindest eine Positionserfassungseinheit aufweist, welche zu einer Erfassung einer relativen und/oder absoluten Position des autonomen Arbeitsgeräts vorgesehen ist. Erfindungsgemäβ ist die zumindest eine Positionserfassungseinheit zu einer Erfassung einer Position des autonomen Arbeitsgeräts innerhalb des Arbeitsbereichs vorgesehen. Unter einer "Positionserfassungseinheit" soll in diesem Zusammenhang insbesondere eine Einheit verstanden werden, die zu einer direkten oder indirekten Erfassung einer relativen und/oder absoluten Position des autonomen Arbeitsgeräts vorgesehen ist. Vorzugsweise soll darunter insbesondere eine Einheit verstanden werden, welche dazu vorgesehen ist, über externe Einflussgrößen und/oder Informationen eine eigene relative Position in einem Bezugssystem und/oder gegenüber einem Bezugspunkt zu bestimmen. Es sind verschiedene, einem Fachmann als sinnvoll erscheinende Daten denkbar, welche die Positionserfassungseinheit zu einer Erfassung einer relativen und/oder absoluten Position nutzen kann, wie beispielsweise GPS-Daten, Odometriedaten, Ultraschalldaten, Radardaten, Geschwindigkeitsdaten, LiDAR-Daten, Beacon-daten und/oder Bilddaten. Die Daten können dabei insbesondere sowohl einzeln als auch in Kombination, wie insbesondere durch Sensorfusion, genutzt werden. Dadurch kann insbesondere eine zuverlässige Navigation des autonomen Arbeitsgeräts erreicht werden. Vorzugsweise kann in einer regulären Betriebsphase vorteilhaft eine zuverlässige Navigation ohne die temporären Markiervorrichtungen erreicht werden.

Ferner geht die Erfindung aus von einem System mit dem zumindest einen autonomen Arbeitsgerät und mit zumindest einer temporären Markiervorrichtung. Es wird ferner vorgeschlagen, dass die zumindest eine temporäre Markiervorrichtung von einer passiven, kontinuierlichen Markiervorrichtung gebildet ist. Vorzugsweise löst sich die passive, kontinuierliche Markiervorrichtung nach einer definierten Zeitspanne selbsttätig auf. Vorzugsweise ist die zumindest eine temporäre Markiervorrichtung von einem Markierschaum gebildet. Besonders bevorzugt kann der Markierschaum von einem Bediener mittels eines Sprays aufgebracht werden. Vorzugsweise löst sich der Markierschaum nach einer vorgegebenen Zeit insbesondere selbsttätig auf. Bevorzugt wird die temporäre Markiervorrichtung von einem Bediener entlang einer Grenze des Arbeitsbereichs aufgebracht. Vorzugsweise enthält der Markierschaum insbesondere Partikel, welche vorteilhaft von dem autonomen Arbeitsgerät erfasst werden können. Hierbei sind verschiedene, einem Fachmann als sinnvoll erscheinende Partikel denkbar, wie insbesondere ferromagnetische und/oder fluoreszierende Partikel. Unter einer "passiven, kontinuierlichen Markiervorrichtung" soll in diesem Zusammenhang insbesondere eine Markiervorrichtung verstanden werden, welche in zumindest einem Zustand kontinuierlich, insbesondere zumindest im Wesentlichen unterbrechungsfrei, entlang einer Grenze des Arbeitsbereichs angeordnet wird. Es sind verschiedene, einem Fachmann als sinnvoll erscheinende Ausgestaltungen der passiven, kontinuierlichen Markiervorrichtung denkbar, insbesondere ist die Markiervorrichtung jedoch als ein Markierschaum und/oder als ein Markierspray ausgebildet. Dadurch kann insbesondere vorteilhaft präzise und schnell ein Arbeitsbereich definiert werden. Ferner kann bei einer Ausbildung als Markierschaum insbesondere auf ein späteres Entfernen der Markiervorrichtung verzichtet werden. Es kann ein vorteilhaft hoher Bedienkomfort erreicht werden.

Des Weiteren wird vorgeschlagen, dass das System zumindest zwei temporäre Markiervorrichtungen verschiedenen Typs aufweist. Es wird ferner vorgeschlagen, dass die temporären Markiervorrichtungen als passive Landmarken ausgebildet sind. Vorzugsweise sind die zumindest zwei temporären Markiervorrichtungen verschiedenen Typs über eine Farbcodierung, differierende Reflektoren und/oder differierende RFID-Chips unterscheidbar. Unter einer "passiven Landmarke" soll in diesem Zusammenhang insbesondere eine Landmarke verstanden werden, welche insbesondere frei von einer Energieversorgung ausgebildet ist. Vorzugsweise soll darunter insbesondere eine Landmarke verstanden werden, welche frei von einer aktiven Informationsausgabe ausgebildet ist. Grundsätzlich wäre jedoch auch denkbar, dass die temporären Markiervorrichtungen als aktive Landmarken ausgebildet sind. Eine Energieversorgung kann dabei beispielsweise mittels Batterie- und/oder Solarbetrieb erfolgen. Dabei soll in diesem Zusammenhang unter einer "Landmarke" insbesondere eine zumindest teilweise erdspießartige Markiervorrichtung verstanden werden. Vorzugsweise soll darunter insbesondere eine Markiervorrichtung verstanden werden, welche zumindest einen Spieß zu einer Fixierung auf einem Boden aufweist. Durch die erfindungsgemäße Ausgestaltung des Systems kann vorteilhaft ein Arbeitsbereich markiert werden. Ferner können dadurch insbesondere temporäre Markiervorrichtungen verschiedenen Typs für unterschiedliche Anwendungen bereitgestellt werden. Es kann eine vorteilhaft hohe Variabilität erreicht werden. Ferner können dadurch vorteilhaft günstige temporäre Markiervorrichtungen bereitgestellt werden. Durch eine Farbcodierung kann insbesondere für einen Bediener eine einfache Erkennung der Bedeutung der temporären Markiervorrichtung erreicht werden.

Des Weiteren wird vorgeschlagen, dass zumindest eine temporäre Markiervorrichtung zumindest eines ersten Typs dazu vorgesehen ist, zu einer temporären Markierung einer virtuellen Grenze eines Arbeitsbereichs des autonomen Arbeitsgeräts temporär auf der virtuellen Grenze positioniert zu werden. Vorzugsweise sind die temporären Markiervorrichtungen eines ersten Typs dazu vorgesehen, in zumindest annähernd regelmäßigen Abständen entlang einer Grenze des Arbeitsbereichs positioniert zu werden. Bevorzugt kann dabei unter einer Grenze sowohl eine Außengrenze, als auch eine Innengrenze, welche zur Definition einer Aussparung innerhalb des Arbeitsbereichs vorgesehen ist, des Arbeitsbereichs verstanden werden. Vorzugsweise ist jedoch jeweils ein Typ von temporären Markiervorrichtungen für Außengrenzen und jeweils ein Typ von temporären Markiervorrichtungen für Innengrenzen vorgesehen.

Hierdurch können vorteilhaft auch nahe beieinander liegende Innen- und Außengrenzen realisiert werden. Durch eine entsprechende Ausgestaltung kann vorteilhaft einfach und gezielt ein Arbeitsbereich definiert werden.

Es wird ferner vorgeschlagen, dass zumindest eine temporäre Markiervorrichtung zumindest eines weiteren Typs dazu vorgesehen ist, zu einer temporären Markierung einer geschlossenen Aussparung innerhalb des Arbeitsbereichs des autonomen Arbeitsgeräts, temporär in einem Mittelpunkt der Aussparung positioniert zu werden. Vorzugsweise weist die geschlossene Aussparung dabei insbesondere eine geometrische Form auf, welche durch die temporäre Markiervorrichtung definiert ist. Dabei wäre insbesondere denkbar, dass eine geometrische Form der geschlossenen Aussparung an der temporären Markiervorrichtung ausgewählt werden kann. Dadurch kann vorteilhaft einfach, insbesondere mit lediglich einer temporären Markiervorrichtung, eine Aussparung definiert werden. Hierdurch können bei einer Definition des Arbeitsbereichs vorteilhaft schnell geschlossene Aussparungen geschaffen werden. Vorzugsweise kann dabei durch Verwendung mehrerer temporärer Markierungen des weiteren Typs eine große geschlossene Aussparung geschaffen werden, bei welcher sich die Aussparungsbereiche der einzelnen temporären Markierungen des weiteren Typs jeweils überlagern.

Es wird weiter vorgeschlagen, dass zumindest eine temporäre Markiervorrichtung zumindest eines weiteren Typs dazu vorgesehen ist, zu einer Erweiterung und/oder Einschränkung des Arbeitsbereichs des autonomen Arbeitsgeräts temporär innerhalb, vorzugsweise in einem Mittelpunkt eines Erweiterungsbereichs und/oder Einschränkungsbereichs, positioniert zu werden. Vorzugsweise ist eine temporäre Markiervorrichtung des weiteren Typs dazu vorgesehen, zu einer Erweiterung des Arbeitsbereichs des autonomen Arbeitsgeräts temporär innerhalb, vorzugsweise in einem Mittelpunkt des Erweiterungsbereichs, positioniert zu werden und eine temporäre Markiervorrichtung eines weiteren Typs ist dazu vorgesehen, zu einer Einschränkung des Arbeitsbereichs des autonomen Arbeitsgeräts temporär innerhalb, vorzugsweise in einem Mittelpunkt des Einschränkungsbereichs, positioniert zu werden. Bevorzugt wird dazu bei einer Erweiterung des Arbeitsbereichs jeweils der Erweiterungsbereich der temporären Markiervorrichtung mit einem aktuellen Arbeitsbereich überlagert, sodass ein neuer Arbeitsbereich jeweils von einer Vereinigungsmenge gebildet ist. Bei einer Einschränkung wird bevorzugt jeweils der Einschränkungsbereich der temporären Markiervorrichtung derart mit einem aktuellen Arbeitsbereich überlagert, dass ein neuer Arbeitsbereich jeweils von dem aktuellen Arbeitsbereich abzüglich der Schnittmenge zwischen dem Einschränkungsbereich und dem aktuellen Arbeitsbereich gebildet ist. Eine geometrische Form des Erweiterungsbereichs und/oder des Einschränkungsbereichs ist dabei insbesondere abhängig von der temporären Markiervorrichtung. Dabei wäre insbesondere denkbar, dass eine geometrische Form des Erweiterungsbereichs und/oder des Einschränkungsbereichs an der temporären Markiervorrichtung ausgewählt werden kann. Dadurch kann insbesondere vorteilhaft einfach und schnell ein Arbeitsbereich verändert werden, insbesondere ohne dazu nochmals den gesamten Arbeitsbereich neu zu definieren. Insbesondere kann eine intuitive Veränderung des Arbeitsbereichs durch Nachstecken von temporären Markiervorrichtungen erreicht werden. Hierdurch kann insbesondere eine vorteilhaft hohe Bedienerfreundlichkeit bereitgestellt werden. Vorzugsweise kann die zumindest eine temporäre Markiervorrichtung des weiteren Typs direkt nach einer ersten Durchfahrt des autonomen Arbeitsgeräts wieder entfernt werden. Hierdurch kann insbesondere eine Anzahl von temporären Markierungsvorrichtungen gering gehalten werden, da der Arbeitsbereich sukzessive trainiert werden kann.

Zudem wird vorgeschlagen, dass zumindest eine temporäre Markiervorrichtung zumindest eines weiteren Typs dazu vorgesehen ist, zu einer temporären Markierung einer temporären, geschlossenen Aussparung innerhalb des Arbeitsbereichs des autonomen Arbeitsgeräts temporär in einem Mittelpunkt der temporären Aussparung positioniert zu werden. Vorzugsweise bleibt die zumindest eine temporäre Markiervorrichtung eines weiteren Typs dabei insbesondere so lange in einem Mittelpunkt der temporären Aussparung, wie die temporäre, geschlossene Aussparung bestehen bleibt. Bevorzugt wird diese temporäre, geschlossene Aussparung insbesondere nicht kartiert, sondern jeweils während einer regulären Betriebsphase individuell berücksichtigt. Grundsätzlich wäre jedoch auch denkbar, dass die temporäre, geschlossene Aussparung kartiert wird, wobei jeweils in der regulären Betriebsphase geprüft wird, ob sich die temporäre Markiervorrichtung eines vierten Typs noch in dem Arbeitsbereich befindet. Dadurch kann insbesondere kurzzeitig ein Bereich des Arbeitsbereichs ausgeschlossen werden, insbesondere bei temporär wachsenden Blumen, Baustellen innerhalb des Arbeitsbereichs oder dergleichen. Hierdurch kann insbesondere eine vorteilhaft hohe Flexibilität erreicht werden.

Ferner geht die Erfindung aus von einem Verfahren zum Betrieb eines autonomen Arbeitsgeräts, insbesondere zum Betrieb eines Systems. Es wird vorgeschlagen, dass in einem initialen Schritt ein Arbeitsbereich des autonomen Arbeitsgeräts mittels zumindest einer temporären Markiervorrichtung definiert wird, in einer darauffolgenden Einlernphase der Arbeitsbereich von dem autonomen Arbeitsgerät selbsttätig kartiert wird und das autonome Arbeitsgerät in einer auf die Einlernphase folgenden regulären Betriebsphase frei von materiellen Markierungen navigiert. Vorzugsweise wird in dem initialen Schritt ein Arbeitsbereich des autonomen Arbeitsgeräts von einem Bediener mittels zumindest einer temporären Markiervorrichtung, insbesondere durch Positionieren der zumindest einen temporären Markiervorrichtung in dem Arbeitsbereich, definiert. Bevorzugt wird in dem initialen Schritt ein Arbeitsbereich des autonomen Arbeitsgeräts von einem Bediener mittels einer Vielzahl von temporären Markiervorrichtungen definiert. Besonders bevorzugt erfolgt eine Kartierung des Arbeitsbereichs ohne Eingriff eines Bedieners. Insbesondere kann die zumindest eine temporäre Markiervorrichtung vor der regulären Betriebsphase, insbesondere von einem Bediener, entfernt werden. Durch die erfindungsgemäße Ausgestaltung des Verfahrens kann vorteilhaft während einer regulären Betriebsphase auf temporäre Markiervorrichtungen verzichtet werden. Insbesondere kann so vorteilhaft auf dauerhafte Markiervorrichtungen verzichtet werden, welche das autonome Arbeitsgerät während des Betriebs stören können. Ferner kann dadurch erreicht werden, dass lediglich für eine Einlernphase temporäre Markiervorrichtungen benötigt werden. Zudem kann erreicht werden, dass die temporären Markiervorrichtungen vor dauerhaften Witterungseinflüssen geschützt sind.

Des Weiteren wird vorgeschlagen, dass in dem initialen Schritt zu einer Definition des Arbeitsbereichs des autonomen Arbeitsgeräts zumindest eine als Landmarke ausgebildete temporäre Markiervorrichtung in und/oder an dem Arbeitsbereich positioniert wird. Bevorzugt wird in dem initialen Schritt zu einer Definition des Arbeitsbereichs des autonomen Arbeitsgeräts von einem Bediener zumindest eine als Landmarke ausgebildete temporäre Markiervorrichtung in und/oder an dem Arbeitsbereich positioniert. Vorzugsweise wird die zumindest eine temporäre Markiervorrichtung auf einer Grenze des Arbeitsbereichs positioniert. Dadurch kann vorteilhaft einfach und gezielt ein Arbeitsbereich definiert werden.

Es wird ferner vorgeschlagen, dass die zumindest eine temporäre Markiervorrichtung nach der Einlernphase aus dem Arbeitsbereich entfernt wird. Bevorzugt wird die zumindest eine temporäre Markiervorrichtung nach der Einlernphase von einem Bediener aus dem Arbeitsbereich entfernt. Vorzugsweise können temporäre Markiervorrichtungen jedoch zumindest temporär auch während der regulären Betriebsphase in und/oder an dem Arbeitsbereich angeordnet werden, um beispielsweise eine Erweiterung und/oder eine Einschränkung des Arbeitsbereichs durchzuführen. Dadurch kann erreicht werden, dass die temporären Markiervorrichtungen vor dauerhaften Witterungseinflüssen geschützt sind. Insbesondere kann dadurch verhindert werden, dass die zumindest eine temporäre Markiervorrichtung das autonome Arbeitsgerät während einer regulären Betriebsphase stört.

Es wird weiter vorgeschlagen, dass von einem Bediener während einer regulären Betriebsphase zu einer Erweiterung und/oder Einschränkung des Arbeitsbereichs temporär zumindest eine temporäre Markiervorrichtung in und/oder an dem Arbeitsbereich positioniert wird. Vorzugsweise wird die zumindest eine temporäre Markiervorrichtung nach einem Einlernen der geänderten Bereiche des Arbeitsbereichs wieder entfernt. Dadurch kann insbesondere vorteilhaft einfach und schnell ein Arbeitsbereich verändert werden, insbesondere ohne dazu nochmals den gesamten Arbeitsbereich neu zu definieren. Hierdurch kann insbesondere eine vorteilhaft hohe Bedienerfreundlichkeit bereitgestellt werden. Vorzugsweise kann die zumindest eine temporäre Markiervorrichtung eines dritten Typs direkt nach einer ersten Durchfahrt des autonomen Arbeitsgeräts wieder entfernt werden.

Das erfindungsgemäße autonome Arbeitsgerät sowie das erfindungsgemäße System und das erfindungsgemäße Verfahren sollen hierbei nicht auf die oben beschriebene Anwendung und Ausführungsform beschränkt sein. Insbesondere können das erfindungsgemäße autonome Arbeitsgerät sowie das erfindungsgemäße System und das erfindungsgemäße Verfahren zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes autonomes Arbeitsgerät mit einer Erfassungsvorrichtung und mit einer Steuer- und Regeleinheit in einer schematischen Darstellung,
- Fig. 2: einen Garten mit einem Arbeitsbereich und das erfindungsgemäße autonome Arbeitsgerät in einer Einlernphase in einer schematischen Darstellung,
- Fig. 3: den Garten mit dem Arbeitsbereich und das erfindungsgemäße autonome Arbeitsgerät in einer regulären Betriebsphase in einer schematischen Darstellung,
- Fig. 4: den Garten mit dem Arbeitsbereich und das erfindungsgemäße autonome Arbeitsgerät in der regulären Betriebsphase während einer Arbeitsbereichsänderung in einer schematischen Darstellung
- Fig. 5: eine temporäre Markiervorrichtung in einer ersten möglichen Ausgestaltung in einer schematischen Darstellung,
- Fig. 6: die temporäre Markiervorrichtung in einer zweiten möglichen Ausgestaltung in einer schematischen Darstellung,
- Fig. 7: eine temporäre Markiervorrichtung in einer dritten möglichen Ausgestaltung in einer schematischen Darstellung und
- Fig. 8: ein Ablaufdiagramm eines Verfahrens zum Betrieb des erfindungsgemäßen autonomen Arbeitsgeräts.

### Beschreibung des Ausführungsbeispiels

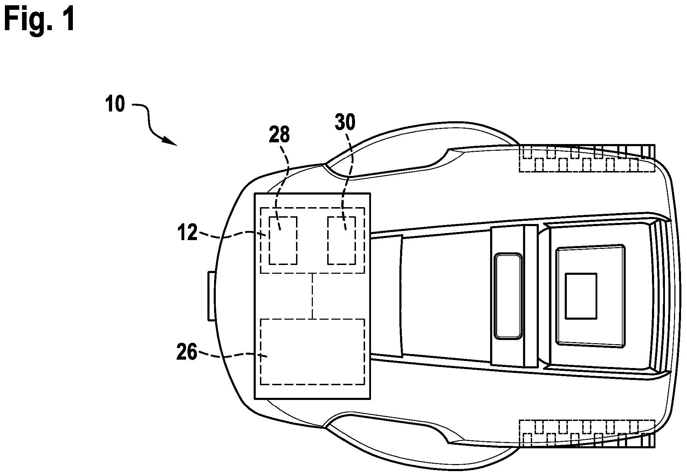

Figur 1 zeigt ein autonomes Arbeitsgerät 10. Das autonome Arbeitsgerät 10 ist als ein autonomer Rasenmäher ausgebildet. Das autonome Arbeitsgerät 10 ist als ein Rasenmähroboter ausgebildet. Grundsätzlich wäre jedoch auch eine andere, einem Fachmann als sinnvoll erscheinende Ausbildung denkbar. Das autonome Arbeitsgerät 10 weist eine Erfassungsvorrichtung 12 auf. Die Erfassungsvorrichtung 12 ist zu einer Erfassung eines initial definierten Arbeitsbereichs 24 vorgesehen. Die Erfassungsvorrichtung 12 ist zu einer Erfassung eines mittels zumindest einer temporären Markiervorrichtung 14, 14', 14", 16, 16', 16", 18, 18', 18", 20, 20', 20", 22, 22', 22" initial definierten Arbeitsbereichs 24 vorgesehen. Die Erfassungsvorrichtung 12 ist zu einer Erfassung einer von einem Bediener initial definierten Grenze 34, 36 des Arbeitsbereichs 24 vorgesehen. Die Grenzen 34, 36 des Arbeitsbereichs 24 werden dabei von einem Bediener mittels der temporären Markiervorrichtungen 14, 14', 14", 16, 16', 16", 18, 18', 18", 20, 20', 20", 22, 22', 22" definiert.

Die Erfassungsvorrichtung 12 weist eine Sensoreinheit 28 auf. Die Sensoreinheit 28 ist zu einer Erfassung von Kenngrößen der temporären Markiervorrichtungen 14, 14', 14", 16, 16', 16", 18, 18', 18", 20, 20', 20", 22, 22', 22" vorgesehen. Die Sensoreinheit 28 ist zu einer Erfassung zwei verschiedener Kenngrößen der temporären Markiervorrichtungen 14, 14', 14", 16, 16', 16", 18, 18', 18", 20, 20', 20", 22, 22', 22" vorgesehen. Die Sensoreinheit 28 ist zu einer Erfassung einer aktuellen Position einer erfassten temporären Markiervorrichtung 14, 14', 14", 16, 16', 16", 18, 18', 18", 20, 20', 20", 22, 22', 22" relativ zu der Sensoreinheit 28 vorgesehen. Ferner ist die Sensoreinheit 28 zu einer Erfassung eines Typs einer erfassten temporären Markiervorrichtung 14, 14', 14", 16, 16', 16", 18, 18', 18", 20, 20', 20", 22, 22', 22" vorgesehen. Die Sensoreinheit 28 weist drei nicht weiter sichtbare optische Sensoren auf, über welche eine relative Position sowie ein Typ der temporären Markiervorrichtungen 14, 14', 14", 16, 16', 16", 18, 18', 18", 20, 20', 20", 22, 22', 22" erfasst werden kann.

Des Weiteren weist die Erfassungsvorrichtung 12 eine Positionserfassungseinheit 30 auf. Die Positionserfassungseinheit 30 ist zu einer Erfassung einer relativen und/oder absoluten Position des autonomen Arbeitsgeräts 10 vorgesehen. Die Positionserfassungseinheit 30 ist zu einer Erfassung einer relativen und/oder absoluten Position des autonomen Arbeitsgeräts 10 innerhalb des Arbeitsbereichs 24 vorgesehen. Die Positionserfassungseinheit 30 ist zu einer Erfassung einer absoluten Position des autonomen Arbeitsgeräts 10 vorgesehen. Grundsätzlich wäre jedoch auch denkbar, dass die Positionserfassungseinheit 30 lediglich zu einer Erfassung einer relativen Position des autonomen Arbeitsgeräts 10, wie beispielsweise relativ zu einer Basisstation des autonomen Arbeitsgeräts 10, vorgesehen ist. Es sind verschiedene, einem Fachmann als sinnvoll erscheinende Daten denkbar, welche die Positionserfassungseinheit 30 zu einer Erfassung einer relativen und/oder absoluten Position nutzen kann, wie beispielsweise GPS-Daten, Odometriedaten, Ultraschalldaten, Radardaten, Geschwindigkeitsdaten, LiDAR-Daten, Beacon-Daten und/oder Bilddaten. Die Positionserfassungseinheit 30 ist hier beispielhaft als eine GPS-Positionserfassungseinheit ausgebildet. Die Positionserfassungseinheit 30 ist dazu vorgesehen eine absolute Position der von einem Bediener initial definierten Grenze 34, 36 des mittels der temporären Markiervorrichtungen 14, 14', 14", 16, 16', 16", 18, 18', 18", 20, 20', 20", 22, 22', 22" initial definierten Arbeitsbereichs 24 zu erfassen.

Des Weiteren weist das autonome Arbeitsgerät 10 eine Steuer- und Regeleinheit 26 auf. Die Steuer- und Regeleinheit 26 wird von einer Recheneinheit gebildet. Ferner ist die Steuer- und Regeleinheit 26 zu einer Kartierung des Arbeitsbereich 24 vorgesehen. Die Steuer- und Regeleinheit 26 ist in einer Einlernphase 46 selbsttätig dazu vorgesehen, den Arbeitsbereich 24 zu kartieren. Die Steuer- und Regeleinheit 26 ist dazu vorgesehen, den Arbeitsbereich 24 abhängig von den erfassten Kenngrößen der temporären Markiervorrichtungen 14, 14', 14", 16, 16', 16", 18, 18', 18", 20, 20', 20", 22, 22', 22" zu kartieren. Zu einer Kartierung des Arbeitsbereichs 24 ist die Steuer- und Regeleinheit 26 dazu vorgesehen, die Daten der Erfassungsvorrichtung 12 auszuwerten. Die Steuer- und Regeleinheit 26 ist dabei dazu vorgesehen, die Daten der Sensoreinheit 28 der Erfassungsvorrichtung 12 hinsichtlich einer relativen Position sowie eines Typs der temporären Markiervorrichtungen 14, 14', 14", 16, 16', 16", 18, 18', 18", 20, 20', 20", 22, 22', 22" auszuwerten. Ferner ist die Steuer- und Regeleinheit 26 dabei dazu vorgesehen, die Daten der Positionserfassungseinheit 30 hinsichtlich einer absoluten Position des autonomen Arbeitsgeräts 10 auszuwerten. Die Steuer- und Regeleinheit 26 schließt daraus auf eine absolute Position sowie einen Verlauf der Grenzen 34, 36 des Arbeitsbereichs 24. Die Erfassungsvorrichtung 12 ist mit der Steuer- und Regeleinheit 26 verbunden.

Grundsätzlich wäre denkbar, dass die Steuer- und Regeleinheit 26 dazu vorgesehen ist, den Arbeitsbereich 24, welcher abhängig von den erfassten Kenngrößen der temporären Markiervorrichtungen 14, 14', 14", 16, 16', 16", 18, 18', 18", 20, 20', 20", 22, 22', 22" kartiert wurde, lediglich temporär zu speichern und diesen nachträglich zu korrigiere. Dabei wäre insbesondere denkbar, dass mittels der temporären Markiervorrichtungen 14, 14', 14", 16, 16', 16", 18, 18', 18", 20, 20', 20", 22, 22', 22" je nach Typ harte Grenzen und weiche Grenzen des Arbeitsbereichs 24 definiert werden können. Die Steuer- und Regeleinheit 26 könnte bei einer Kartierung eines endgültigen Arbeitsbereichs eine weiche Grenze des temporären Arbeitsbereichs 24 falls möglich an eine natürliche Grenze anpassen. Die Steuer- und Regeleinheit 26 könnte bei einer Kartierung des endgültigen Arbeitsbereichs eine weiche Grenze des temporären Arbeitsbereichs 24 in einem Nahbereich der weichen Grenze durch eine durch eine Grenzerfassungseinheit erfasste natürliche Grenze korrigieren. So könnte die weiche Grenze insbesondere von dem autonomen Arbeitsgerät 10 selbsttätig an natürliche Grenzen wie Rasengrenzen, Treppenstufen, Mauern, Zäune, Kanten vor Abgründen und/oder anderen, einem Fachmann als sinnvoll erscheinende Gegebenheiten angepasst werden.

Harte Grenzen des Arbeitsbereichs 24 könnten dagegen direkt als Grenzen des endgültigen Arbeitsbereichs übernommen werden. Vorzugsweise könnten dem autonomen Arbeitsgerät 10 so vorteilhaft Gefahren für das autonome Arbeitsgerät 10 selbst, Pflanzen und/oder Personen angezeigt werden bzw. könnte ein Überfahren dieser Grenzen sicher vermieden werden.

Ferner ist die Steuer- und Regeleinheit 26 in einer regulären Betriebsphase 48 dazu vorgesehen, das autonome Arbeitsgerät 10 unabhängig von den temporären Markiervorrichtungen 14, 14', 14", 16, 16', 16", 18, 18', 18", 20, 20', 20", 22, 22', 22" und abhängig von einem kartierten Arbeitsbereich 24 zu navigieren. Das autonome Arbeitsgerät 10 kann dadurch in einer regulären Betriebsphase 48 frei von den temporären Markiervorrichtungen 14, 14', 14", 16, 16', 16", 18, 18', 18", 20, 20', 20", 22, 22', 22" navigieren. Dadurch können die temporären Markiervorrichtungen 14, 14', 14", 16, 16', 16", 18, 18', 18", 20, 20', 20", 22, 22', 22" vor der regulären Betriebsphase 48 entfernt werden. Das autonome Arbeitsgerät 10 navigiert in einer regulären Betriebsphase 48 anhand des von der Steuer- und Regeleinheit 26 kartierten Arbeitsbereichs 24 sowie anhand der Positionsdaten der Positionserfassungseinheit 30.

Das autonome Arbeitsgerät 10 und die temporären Markiervorrichtungen 14, 14', 14", 16, 16', 16", 18, 18', 18", 20, 20', 20", 22, 22', 22" bilden ein System 32. Die temporären Markiervorrichtungen 14, 14', 14", 16, 16', 16", 18, 18', 18", 20, 20', 20", 22, 22', 22" sind verschiedenen Typs. Die temporären Markiervorrichtungen 14, 14', 14", 16, 16', 16", 18, 18', 18", 20, 20', 20", 22, 22', 22" sind jeweils als Landmarken ausgebildet. Die temporären Markiervorrichtungen 14, 14', 14", 16, 16', 16", 18, 18', 18", 20, 20', 20", 22, 22', 22" sind jeweils als von Hand steckbare Landmarken ausgebildet. Grundsätzlich wäre jedoch auch eine andere, einem Fachmann als sinnvoll erscheinende Ausbildung der temporären Markiervorrichtungen 14, 14', 14", 16, 16', 16", 18, 18', 18", 20, 20', 20", 22, 22', 22" denkbar.

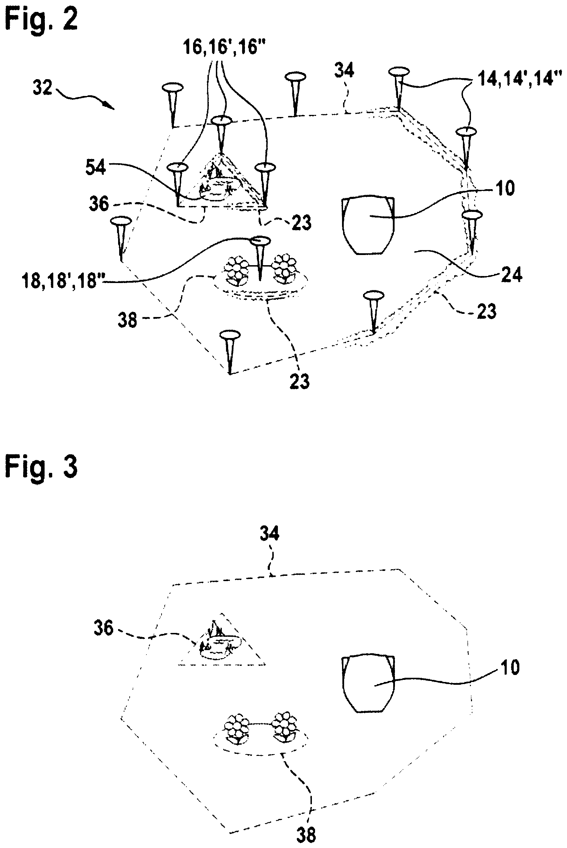

Alternativ ist die temporäre Markiervorrichtung 23 von einer passiven, kontinuierlichen Markiervorrichtung gebildet ist. Die passive, kontinuierliche Markiervorrichtung 23 löst sich dabei nach einer definierten Zeitspanne selbsttätig auf. Die temporäre Markiervorrichtung 23 ist dabei von einem Markierschaum gebildet. Der Markierschaum entspricht dabei im Wesentlichen einem Schaum, wie er bereits bei Freistoßsprays verwendet wird. Die temporäre Markiervorrichtung 23 wird dabei von einem Bediener mittels eines Sprays entlang der Grenze des Arbeitsbereichs 24 aufgebracht. Die temporäre Markiervorrichtung 23 ist in der Figur 2 gestrichelt angedeutet. Die temporäre Markiervorrichtung 23 wird dabei von dem autonomen Arbeitsgerät 10 während der Einlernphase erfasst.

Die temporären Markiervorrichtungen 14, 14', 14", 16, 16', 16", 18, 18', 18", 20, 20', 20", 22, 22', 22" sind jeweils als passive Landmarken ausgebildet. Die temporären Markiervorrichtungen 14, 14', 14", 16, 16', 16", 18, 18', 18", 20, 20', 20", 22, 22', 22" sind frei von einer Energieversorgung. Grundsätzlich wäre jedoch auch denkbar, dass die temporären Markiervorrichtungen 14, 14', 14", 16, 16', 16", 18, 18', 18", 20, 20', 20", 22, 22', 22" als aktive Landmarken ausgebildet sind. Die verschiedenen Typen von temporären Markiervorrichtungen 14, 14', 14", 16, 16', 16", 18, 18', 18", 20, 20', 20", 22, 22', 22" sind für den Bediener mittels Farbcodierung unterscheidbar. Die temporären Markiervorrichtungen 14, 14', 14", 16, 16', 16", 18, 18', 18", 20, 20', 20", 22, 22', 22" haben jeweils abhängig von einem Typ eine spezifische Farbe, wobei sich die Farben der Typen unterscheiden (Figur 2).

Das System 32 weist verschiedene Typen von temporären Markiervorrichtungen 14, 14', 14", 16, 16', 16", 18, 18', 18", 20, 20', 20", 22, 22', 22" auf, die jeweils auf unterschiedliche Weise zu einer Definition des Arbeitsbereichs 24 dienen. Die verschiedenen Typen von temporären Markiervorrichtungen 14, 14', 14", 16, 16', 16", 18, 18', 18", 20, 20', 20", 22, 22', 22" können von einem Bediener jeweils abhängig von einer Anwendung bzw. einem zu definierenden Bereich des Arbeitsbereichs 24 ausgewählt werden. Das System 32 weist temporäre Markiervorrichtungen 14, 14', 14" eines ersten Typs auf. Die temporären Markiervorrichtungen 14, 14', 14" eines ersten Typs sind dazu vorgesehen, zu einer temporären Markierung einer virtuellen Grenze 34 des Arbeitsbereichs 24 des autonomen Arbeitsgeräts 10 temporär auf der virtuellen Grenze 34 positioniert zu werden. Die Grenze 34 definiert dabei eine Außengrenze des Arbeitsbereichs 24. Ferner weist das System 32 temporäre Markiervorrichtungen 16, 16', 16" eines zweiten Typs auf. Die temporären Markiervorrichtungen 16, 16', 16" eines zweiten Typs sind dazu vorgesehen, zu einer temporären Markierung einer virtuellen Grenze 36 eines Arbeitsbereichs 24 des autonomen Arbeitsgeräts 10 temporär auf der virtuellen Grenze 36 positioniert zu werden. Die Grenze 36 definiert dabei eine Innengrenze des Arbeitsbereichs 24, also eine Grenze 36 um eine Aussparung 38 innerhalb des Arbeitsbereichs 24. Grundsätzlich wäre jedoch auch denkbar, dass der selbe Typ von temporären Markiervorrichtungen 14, 14', 14", 16, 16', 16" für Außengrenzen und Innengrenzen verwendet werden kann. Dies weist jedoch insbesondere Nachteile bei dicht beieinander liegenden Außen- und Innengrenzen auf (Figur 2).

Ferner weist das System 32 temporäre Markiervorrichtungen 18, 18', 18" eines weiteren Typs auf. Die temporäre Markiervorrichtungen 18, 18', 18" eines dritten Typs sind dazu vorgesehen, zu einer temporären Markierung einer geschlossenen Aussparung 38 innerhalb des Arbeitsbereichs 24 des autonomen Arbeitsgeräts 10 temporär in einem Mittelpunkt der Aussparung 38 positioniert zu werden. Die geschlossene Aussparung 38 weist dabei eine geometrische Form auf, welche durch die temporäre Markiervorrichtung 18, 18', 18" definiert ist. Es sind temporäre Markiervorrichtungen 18, 18', 18" des dritten Typs mit verschiedenen geometrischen Formen der Aussparung 38 verfügbar. Die Form, die Maße sowie die Ausrichtung der Aussparung 38 ist jeweils auf dem Kopf der jeweiligen temporären Markiervorrichtung 18, 18', 18" abgebildet. In der Regel ist die Form der Aussparung 38 jeweils von einem Kreis mit einem spezifischen Durchmesser gebildet. Es sind jedoch auch andere Formen von Aussparungen 38 denkbar. Dabei wäre insbesondere denkbar, dass eine geometrische Form der geschlossenen Aussparung 38 an der temporären Markiervorrichtung 18, 18', 18" ausgewählt werden kann. Dabei wäre insbesondere denkbar, dass die geometrische Form der geschlossenen Aussparung 38 der jeweiligen temporären Markiervorrichtung 18, 18', 18" mittels eines Smartphones, beispielsweise mittels einer NFC-Verbindung, programmiert werden kann. Bei der Verwendung mehrerer temporärer Markierungsvorrichtungen 18, 18', 18" eines dritten Typs kann eine große geschlossene Aussparung geschaffen werden, bei welcher sich die Aussparungen 38 der einzelnen temporären Markierungsvorrichtungen 18, 18', 18" eines dritten Typs jeweils überlagern (Figur 2).

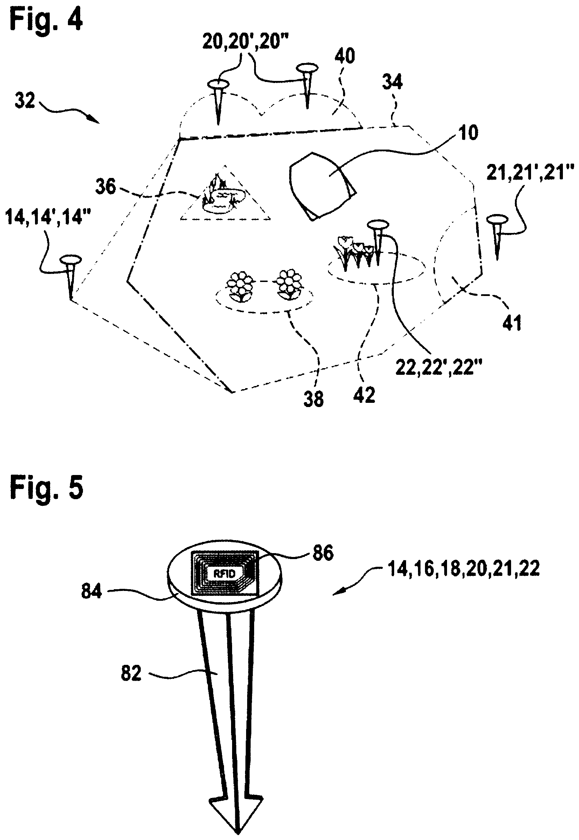

Das Weiteren weist das System 32 temporäre Markiervorrichtungen 20, 20', 20" eines weiteren Typs auf. Die temporären Markiervorrichtungen 20, 20', 20" eines vierten Typs sind dazu vorgesehen, zu einer Erweiterung des Arbeitsbereichs 24 des autonomen Arbeitsgeräts 10, jeweils temporär innerhalb eines Erweiterungsbereichs 40 positioniert zu werden. Die temporären Markiervorrichtungen 20, 20', 20" des vierten Typs sind jeweils dazu vorgesehen, zu einer Erweiterung des Arbeitsbereichs 24 des autonomen Arbeitsgeräts 10 temporär in einem Mittelpunkt des Erweiterungsbereichs 40 positioniert zu werden. Der Erweiterungsbereich 40 weist dabei eine geometrische Form auf, welche durch die temporäre Markiervorrichtung 20, 20', 20" definiert ist. Es sind temporäre Markiervorrichtungen 20, 20', 20" des vierten Typs mit verschiedenen geometrischen Formen des Erweiterungsbereichs 40 verfügbar. Die Form, die Maße sowie die Ausrichtung des Erweiterungsbereich 40 sind jeweils auf dem Kopf der jeweiligen temporären Markiervorrichtung 20, 20', 20" abgebildet. In der Regel ist die Form des Erweiterungsbereichs 40 jeweils von einem Kreis mit einem spezifischen Durchmesser gebildet. Die temporären Markiervorrichtungen 20, 20', 20" des vierten Typs sind zu einer Erweiterung des Arbeitsbereichs 24 nach der Einlernphase 46 in der regulären Betriebsphase 48 vorgesehen. Die temporären Markiervorrichtungen 20, 20', 20" des vierten Typs können dazu insbesondere temporär während der regulären Betriebsphase 48 an dem Arbeitsbereich 24 aufgestellt werden, bis das autonome Arbeitsgerät 10 die temporären Markiervorrichtungen 20, 20', 20" des vierten Typs erfasst und den geänderten Arbeitsbereich 24 kartiert hat. Bei einer Erweiterung des Arbeitsbereichs 24 wird der Erweiterungsbereich 40 der temporären Markiervorrichtung 20, 20', 20" mit einem aktuellen Arbeitsbereich 24 überlagert, sodass ein neuer Arbeitsbereich 24 jeweils von einer Vereinigungsmenge gebildet ist (Figur 4).

Zudem weist das System 32 temporäre Markiervorrichtungen 21, 21', 21" eines weiteren Typs auf. Die temporären Markiervorrichtungen 21, 21', 21" eines fünften Typs sind dazu vorgesehen, zu einer Einschränkung des Arbeitsbereichs 24 des autonomen Arbeitsgeräts 10 jeweils temporär innerhalb eines Einschränkungsbereichs 41 positioniert zu werden. Die temporären Markiervorrichtungen 21, 21', 21" des vierten Typs sind jeweils dazu vorgesehen, zu einer Einschränkung des Arbeitsbereichs 24 des autonomen Arbeitsgeräts 10 temporär in einem Mittelpunkt des Einschränkungsbereichs 41 positioniert zu werden. Der Einschränkungsbereich 41 weist dabei eine geometrische Form auf, welche durch die temporäre Markiervorrichtung 21, 21', 21" definiert ist. Es sind temporäre Markiervorrichtungen 21, 21', 21" des vierten Typs mit verschiedenen geometrische Formen des Einschränkungsbereichs 41 verfügbar. Die Form, die Maße sowie die Ausrichtung des Einschränkungsbereichs 41 sind jeweils auf dem Kopf der jeweiligen temporären Markiervorrichtungen 21, 21', 21" abgebildet. In der Regel ist die Form des Einschränkungsbereichs 41 jeweils von einem Kreis mit einem spezifischen Durchmesser gebildet. Die temporären Markiervorrichtungen 21, 21', 21" des vierten Typs sind zu einer Einschränkung des Arbeitsbereichs 24 nach der Einlernphase 46 in der regulären Betriebsphase 48 vorgesehen. Die temporären Markiervorrichtungen 21, 21', 21" des vierten Typs können dazu insbesondere temporär während der regulären Betriebsphase 48 an dem Arbeitsbereich 24 aufgestellt werden, bis das autonome Arbeitsgerät 10 die temporären Markiervorrichtungen 21, 21', 21" des vierten Typs erfasst und den geänderten Arbeitsbereich 24 kartiert hat. Bei einer Einschränkung des Arbeitsbereichs 24 wird jeweils der Einschränkungsbereich 41 der temporären Markiervorrichtung 21, 21', 21"derart mit einem aktuellen Arbeitsbereich 24 überlagert, dass ein neuer Arbeitsbereich 24 jeweils von dem aktuellen Arbeitsbereich 24 abzüglich der Schnittmenge zwischen dem Einschränkungsbereich 41 und dem aktuellen Arbeitsbereich 24 gebildet ist (Figur 4).

Ferner weist das System 32 temporären Markiervorrichtungen 22, 22', 22" eines weiteren Typs auf. Die temporäre Markiervorrichtungen 22, 22', 22" eines sechsten Typs sind dazu vorgesehen, zu einer temporären Markierung einer temporären, geschlossenen Aussparung 42 innerhalb des Arbeitsbereichs 24 des autonomen Arbeitsgeräts 10 jeweils temporär in einem Mittelpunkt der temporären Aussparung 42 positioniert zu werden. Die temporäre, geschlossene Aussparung 42 weist dabei eine geometrische Form auf, welche durch die temporäre Markiervorrichtung 22, 22', 22" definiert ist. Es sind temporäre Markiervorrichtungen 22, 22', 22" des sechsten Typs mit verschiedenen geometrische Formen der temporären, geschlossenen Aussparung 42 verfügbar. Die Form, die Maße sowie die Ausrichtung der temporären, geschlossenen Aussparung 42 sind jeweils auf dem Kopf der jeweiligen temporären Markiervorrichtung 22, 22', 22" abgebildet. In der Regel ist die Form der temporären, geschlossenen Aussparung 42 jeweils von einem Kreis mit einem spezifischen Durchmesser gebildet. Die temporäre Markiervorrichtung 22, 22', 22" des sechsten Typs bleibt nur so lange in einem Mittelpunkt der temporären Aussparung 42, solange die temporäre, geschlossene Aussparung 42 bestehen bleibt. Die temporäre, geschlossene Aussparung 42 wird dabei von dem autonomen Arbeitsgerät 10 nicht kartiert, sondern jeweils während einer regulären Betriebsphase 48 individuell berücksichtigt. Die temporäre Markiervorrichtung 22, 22', 22" des sechsten Typs dient dazu temporär einen Bereich des Arbeitsbereichs 24 auszusparen, insbesondere bei temporär wachsenden Blumen, z.B. zur Krokussaison, Baustellen innerhalb des Arbeitsbereichs 24 oder dergleichen (Figur 4).

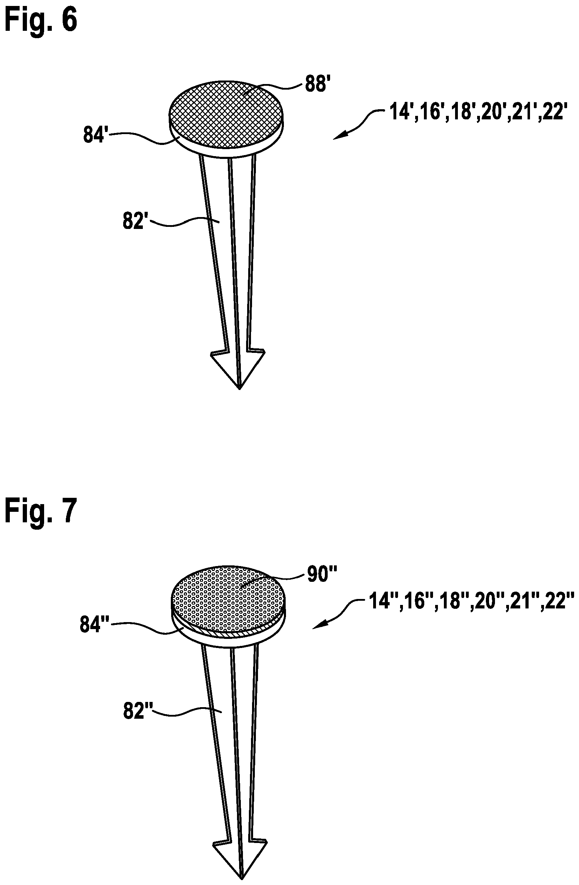

Die temporären Markiervorrichtungen 14, 14', 14", 16, 16', 16", 18, 18', 18", 20, 20', 20", 22, 22', 22" des Systems 32 können verschiedene, einem Fachmann als sinnvoll erscheinende Ausgestaltungen haben. Die temporären Markiervorrichtungen 14, 14', 14", 16, 16', 16", 18, 18', 18", 20, 20', 20", 22, 22', 22" können insbesondere auf verschiedene Art und Weise von dem autonomen Arbeitsgerät 10 erfasst und hinsichtlich ihres Typs unterschieden werden. In den Figuren 5, 6 und 7 sind beispielhaft drei verschiedene mögliche Ausgestaltungen der temporären Markiervorrichtungen 14, 14', 14", 16, 16', 16", 18, 18', 18", 20, 20', 20", 22, 22', 22" dargestellt. Die in den Figuren 5, 6 und 7 dargestellten temporären Markiervorrichtungen 14, 14', 14", 16, 16', 16", 18, 18', 18", 20, 20', 20", 22, 22', 22" können dabei auf alle Typen angewendet werden. Figur 5 zeigt eine mögliche Ausgestaltung der temporären Markiervorrichtungen 14, 16, 18, 20, 21, 22. Die Markiervorrichtungen 14, 16, 18, 20, 21, 22 weisen hier einen Erdspieß 82 sowie einen auf dem Erdspieß 82 angeordneten Kopf 84 auf. Der Erdspieß 82 und der Kopf 84 bestehen aus Kunststoff. In dem Kopf 84 der Markiervorrichtungen 14, 16, 18, 20, 21, 22 ist jeweils ein RFID-Chip 86 angeordnet. Der RFID-Chip 86 ist in den Kopf 84 eingelassen. Auf dem RFID-Chip 86 sind die Daten, insbesondere ein Typ der jeweiligen Markiervorrichtung 14, 16, 18, 20, 21, 22 hinterlegt. Die Daten des RFID-Chips 86 können von der Sensoreinheit 28 der Erfassungsvorrichtung 12 des autonomen Arbeitsgeräts 10 ausgelesen werden. Figur 6 zeigt eine weitere mögliche Ausgestaltung der temporären Markiervorrichtungen 14', 16', 18', 20', 21', 22'. Die Markiervorrichtungen 14', 16', 18', 20', 21', 22' weisen hier ebenfalls einen Erdspieß 82', sowie einen auf dem Erdspieß 82' angeordneten Kopf 84' auf. Der Erdspieß 82' und der Kopf 84' bestehen aus Kunststoff. Der Kopf 84' der Markiervorrichtungen 14', 16', 18', 20', 21', 22' weist an seiner Außenfläche jeweils eine optische Reflektorfolie 88' auf. Die Reflektorfolie 88' weist abhängig von einem Typ der jeweiligen Markiervorrichtung 14', 16', 18', 20', 21', 22' eine unterschiedliche Farbe auf. Die Reflektorfolie 88' sowie eine Farbe der Reflektorfolie 88' können von der Sensoreinheit 28 der Erfassungsvorrichtung 12 des autonomen Arbeitsgeräts 10 optisch erfasst werden. Figur 7 zeigt eine weitere mögliche Ausgestaltung der temporären Markiervorrichtungen 14", 16", 18", 20", 21", 22". Die Markiervorrichtungen 14", 16", 18", 20", 21", 22" weisen hier ebenfalls einen Erdspieß 82", sowie einen auf dem Erdspieß 82" angeordneten Kopf 84" auf. Der Erdspieß 82" und der Kopf 84" bestehen aus Kunststoff. Auf dem Kopf 84" der Markiervorrichtungen 14", 16", 18", 20", 21", 22" ist jeweils ein Retroreflektor 90", insbesondere zur Reflektion im Mikrowellenbereich, angeordnet. Der Retroreflektor 90" weist abhängig von einem Typ der jeweiligen Markiervorrichtung 14', 16', 18', 20', 21', 22' eine unterschiedliche Farbe auf. Der Retroreflektor 90" sowie eine Farbe des Retroreflektors 90" können von der Sensoreinheit 28 der Erfassungsvorrichtung 12 des autonomen Arbeitsgeräts 10 durch Aussenden von Mikrowellen erfasst werden. Grundsätzlich sind jedoch auch noch weitere, einem Fachmann als sinnvoll erscheinende Ausführungsformen der temporären Markiervorrichtungen 14, 14', 14", 16, 16', 16", 18, 18', 18", 20, 20', 20", 22, 22', 22" denkbar. Beispielsweise wäre denkbar, dass die temporären Markiervorrichtungen 14, 14', 14", 16, 16', 16", 18, 18', 18", 20, 20', 20", 22, 22', 22" jeweils mit LED Lichtpunkten ausgestatten sind, welche von dem autonomen Arbeitsgerät 10 mittels einer Lichtfeldkamera, beispielsweise auf Basis transparenter organischer Halbleiter, realisiert werden. Ferner wäre auch denkbar, dass die temporären Markiervorrichtungen 14, 14', 14", 16, 16', 16", 18, 18', 18", 20, 20', 20", 22, 22', 22 unterschiedlich farblich kodiert sind, sodass eine Farbe der temporären Markiervorrichtungen 14, 14', 14", 16, 16', 16", 18, 18', 18", 20, 20', 20", 22, 22', 22" nicht nur einem Bediener, sondern auch dem autonomen Arbeitsgerät 10 zur Unterscheidung dienen.

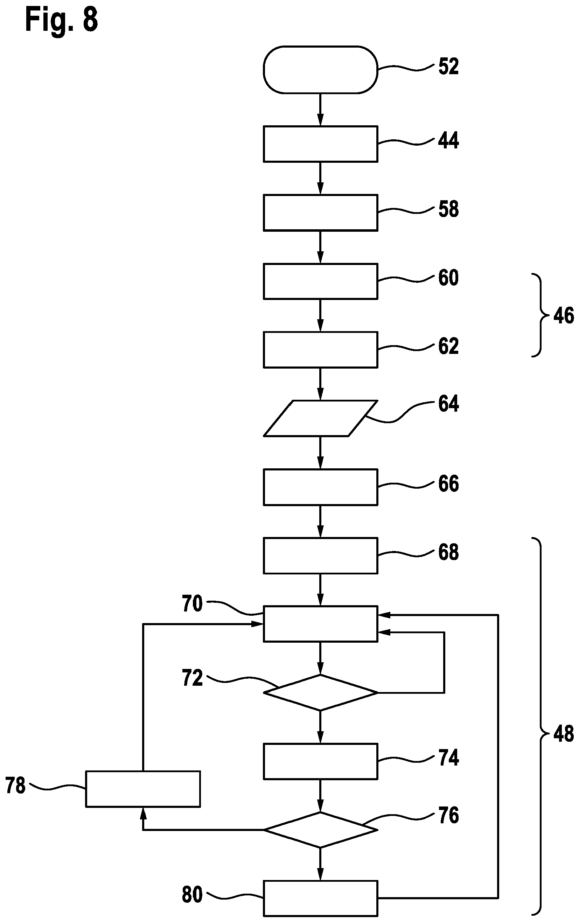

Figur 8 zeigt ein Ablaufdiagramm eines Verfahrens zum Betrieb des autonomen Arbeitsgeräts 10. Das Verfahren beginnt mit einem Start 52 nach einem Reset des autonomen Arbeitsgeräts 10 oder vor einer ersten Inbetriebnahme des autonomen Arbeitsgeräts 10. Auf den Start 52 folgt ein initialer Schritt 44. In dem initialen Schritt 44 wird ein Arbeitsbereich 24 des autonomen Arbeitsgeräts 10 mittels der temporären Markiervorrichtungen 14, 14', 14", 16, 16', 16", 18, 18', 18" definiert. In dem initialen Schritt 44 werden zu einer Definition des Arbeitsbereichs 24 des autonomen Arbeitsgeräts 10 die als Landmarke ausgebildeten temporären Markiervorrichtungen 14, 14', 14", 16, 16', 16", 18, 18', 18" in und an dem Arbeitsbereich 24 positioniert. Figur 2 zeigt einen Garten mit einem beispielhaft definierten Arbeitsbereich 24, nach dem initialen Schritt 44. Die temporären Markiervorrichtungen 14, 14', 14" des ersten Typs sind hier auf einer eine Außengrenze bildende virtuellen Grenze 34 verteilt. Die Grenze 34 wird durch die temporären Markiervorrichtungen 14, 14', 14" definiert. Die temporären Markiervorrichtungen 14, 14', 14" werden dazu in einem definierten Abstand zueinander von dem Bediener entlang der Grenze 34 positioniert. Zu einer Erhöhung einer Genauigkeit der Grenze 34 kann ein Abstand zwischen den temporären Markiervorrichtungen 14, 14', 14" zumindest bereichsweise verringert werden. Die temporären Markiervorrichtungen 16, 16', 16" des zweiten Typs sind hier auf einer eine Innengrenze bildende virtuellen Grenze 36 verteilt. Die Grenze 36 wird durch die temporären Markiervorrichtungen 16, 16', 16" definiert. Die temporären Markiervorrichtungen 16, 16', 16" werden dazu in einem definierten Abstand zueinander von dem Bediener entlang der Grenze 36 positioniert. Die temporären Markiervorrichtungen 16, 16', 16" sind in der Figur 2 beispielhaft um einen Teich 54 angeordnet. Grundsätzlich sind jedoch auch andere Anwendungen denkbar. Eine temporäre Markiervorrichtung 18, 18', 18" des dritten Typs ist hier in einem Mittelpunkt einer geschlossenen Aussparung 38 innerhalb des Arbeitsbereichs 24 des autonomen Arbeitsgeräts 10 positioniert. Die temporäre Markiervorrichtung 18, 18', 18" wird von dem Bediener positioniert. Die temporäre Markiervorrichtung 18, 18', 18" definiert eine kreisförmige, geschlossenen Aussparung 38 innerhalb des Arbeitsbereichs 24. Die temporäre Markiervorrichtung 18, 18', 18" ist in der Figur 2 beispielhaft in einem Blumenbeet 56 angeordnet, welches nicht gemäht werden soll. Grundsätzlich sind jedoch auch andere, insbesondere gartengestalterische Elemente in der Rasenfläche denkbar, welches nicht gemäht werden sollen. Grundsätzlich kann der Bediener erst mit einem kleinen abgesteckten Arbeitsbereich 24 beginnen und sich so mit dem autonomen Arbeitsgerät 10 vertraut machen. Hierdurch kann insbesondere ein vorteilhaft schneller Anfangserfolg, mit lediglich geringem Aufwand erreicht werden. Alternativ kann der Arbeitsbereich 24 des autonomen Arbeitsgeräts 10 in dem initialen Schritt 44 auch mittels der temporären Markiervorrichtung 23 definiert werden. Die temporäre Markiervorrichtung 23 wird hierzu von einem Bediener mittels eines Sprays entlang der Grenze des Arbeitsbereichs 24 aufgebracht.

In einem auf den initialen Schritt 44 folgenden Schritt 58 wird das autonome Arbeitsgerät 10 von dem Bediener in dem Arbeitsbereich 24 positioniert und aktiviert. Das autonome Arbeitsgerät 10 startet daraufhin selbsttätig eine Einlernphase 46. In der Einlernphase 46 wird der Arbeitsbereich 24 von dem autonomen Arbeitsgerät 10 selbsttätig, ohne Eingriff des Bedieners, kartiert. In einem ersten Schritt 60 der Einlernphase 46 navigiert das autonome Arbeitsgerät 10 selbsttätig über den Arbeitsbereich 24 und erfasst die Positionen der Grenzen 34, 36 und Aussparungen 38. Das autonome Arbeitsgerät 10 erfasst hierzu mittels der Erfassungsvorrichtung 12 die absolute Position sowie den Typ der einzelnen temporären Markiervorrichtungen 14, 14', 14", 16, 16', 16", 18, 18', 18" in dem Arbeitsbereich 24. Alternativ kann das autonome Arbeitsgerät 10 in dem Schritt 58 auch eine Position sowie einen Verlauf der temporären Markiervorrichtung 23 erfassen. Anschließend wird der Arbeitsbereich 24 in einem weiteren Schritt 62 von der Steuer- und Regeleinheit 26 des autonomen Arbeitsgeräts 10 kartiert. Dabei werden die Positionen sowie der Typ der temporären Markiervorrichtungen 14, 14', 14", 16, 16', 16", 18, 18', 18" ausgewertet und in Grenzen 34, 36 und Aussparungen 38 umgewandelt. Ein Verlauf sowie eine Position der Grenzen 34, 36 und Aussparungen 38 wird anschließend kartiert. Die temporären Markiervorrichtungen 14, 14', 14", 16, 16', 16", 18, 18', 18" werden nach der Einlernphase 46 aus dem Arbeitsbereich 24 entfernt. Ist die Einlernphase 46 beendet, wird dem Bediener in einer Ausgabe 64 über eine nicht weiter sichtbare Ausgabeeinheit des autonomen Arbeitsgeräts 10 ausgegeben, sodass die temporären Markiervorrichtungen 14, 14', 14", 16, 16', 16", 18, 18', 18" aus dem Arbeitsbereich 24 entfernt werden können. Anschließend werden die temporären Markiervorrichtungen 14, 14', 14", 16, 16', 16", 18, 18', 18" in einem weiteren Schritt 66 von dem Bediener aus dem Arbeitsbereich 24 entfernt. Figur 3 zeigt beispielhaft den Garten nach der Einlernphase 46. Die von der Steuer- und Regeleinheit 26 kartierten Grenzen 34, 36 und Aussparungen 38 sind hierbei gestrichelt dargestellt. In dem Garten befinden sich dabei keine störenden temporären Markiervorrichtungen 14, 14', 14", 16, 16', 16", 18, 18', 18" mehr.

Darauffolgend wird von dem Bediener in einem weiteren Schritt 68 an dem autonomen Arbeitsgerät 10 eine reguläre Betriebsphase 48 gestartet. In der regulären Betriebsphase 48 navigiert das autonome Arbeitsgerät 10 frei von materiellen Markierungen. In einem ersten Schritt 70 der regulären Betriebsphase 48 navigiert das autonome Arbeitsgerät 10 selbsttätig, abhängig von dem kartierten Arbeitsbereich 24 über den Arbeitsbereich 24 und mäht diesen. Während einer regulären Betriebsphase 48 können von dem Bediener zu einer Erweiterung und/oder Einschränkung des Arbeitsbereichs 24 temporär temporäre Markiervorrichtungen 20, 20', 20", 21, 21', 21", 22, 22', 22" in und/oder an dem Arbeitsbereich (24) positioniert werden. Figur 4 zeigt beispielhaft den Garten in der regulären Betriebsphase 48 während einer Änderung des Arbeitsbereichs 24. In Figur 4 sind die aktuellen Grenzen des Arbeitsbereichs 24 jeweils gestrichelt dargestellt, wobei alte Grenzen jeweils durch eine Strich-Punkt-Linie gekennzeichnet sind. Dabei wird in einer Verzweigung 72 mittels der Sensoreinheit 28 der Erfassungsvorrichtung 12 überprüft, ob sich temporäre Markiervorrichtungen 20, 20', 20", 21, 21', 21", 22, 22', 22" in einer Umgebung des autonomen Arbeitsgeräts 10 befinden. Können keine temporären Markiervorrichtungen 20, 20', 20", 21, 21', 21", 22, 22', 22" erfasst werden, wird der Schritt 70 fortgeführt. Konnten temporäre Markiervorrichtungen 20, 20', 20", 21, 21', 21", 22, 22', 22" erfasst werden, wird in einem weiteren Schritt 74 mittels der Erfassungsvorrichtung 12 die absolute Position sowie der Typ der einzelnen temporären Markiervorrichtungen 20, 20', 20", 21, 21', 21", 22, 22', 22" erfasst. Anschließend wird in einer Verzweigung 76 von der Steuer- und Regeleinheit 26 ein Typ der einzelnen temporären Markiervorrichtungen 20, 20', 20", 21, 21', 21", 22, 22', 22" ausgewertet. Handelt es sich bei der erfassten temporären Markiervorrichtung 20, 20', 20",21, 21', 21", 22, 22', 22" um eine temporäre Markiervorrichtung 22, 22', 22" eines sechsten Typs, wird in einem weiteren Schritt 78 von der Steuer- und Regeleinheit 26 die Form der durch die temporäre Markiervorrichtung 22, 22', 22" definierten Aussparung 42 ausgewertet, temporär hinterlegt und bei einer aktuellen Navigation ausgelassen. Anschließend wird der Schritt 70 fortgesetzt. Handelt es sich bei der erfassten temporären Markiervorrichtung 20, 20', 20",21, 21', 21", 22, 22', 22" um eine temporäre Markiervorrichtung 20, 20', 20",21, 21', 21" eines vierten oder fünften Typs, wird in einem weiteren Schritt 80 von der Steuer- und Regeleinheit 26 die Positionen sowie der Typ der temporären Markiervorrichtung 20, 20', 20",21, 21', 21 " ausgewertet und Erweiterungsbereiche 40 und/oder Einschränkungsbereiche 41 umgewandelt. Anschließend werden die Erweiterungsbereiche 40 und/oder Einschränkungsbereiche 41 mit einem aktuell kartierten Arbeitsbereich 24 überlagert und es wird aus der Überlagerung ein neuer Arbeitsbereich 24 kartiert. Anschließend wird der Schritt 70 fortgesetzt. Grundsätzlich wäre auch denkbar, dass der Arbeitsbereich 24 während der regulären Betriebsphase 48 auch mit den temporären Markiervorrichtungen 14, 14', 14", 16, 16', 16", 18, 18', 18" des ersten, zweiten und dritten Typs verändert werden kann. Alternativ wäre auch denkbar, dass der Arbeitsbereich 24 während der regulären Betriebsphase 48 durch Aufbringen der temporären Markiervorrichtung 23 verändert werden kann.

## Patentansprüche

1. Autonomes Arbeitsgerät (10), insbesondere autonomer Rasenmäher, mit zumindest einer Erfassungsvorrichtung (12), welche zu einer Erfassung eines mittels zumindest einer temporären Markiervorrichtung (14, 14', 14", 16, 16', 16", 18, 18', 18", 20, 20', 20", 21, 21', 21", 22, 22', 22", 23) initial zumindest annähernd definierten Arbeitsbereichs (24) vorgesehen ist, und mit zumindest einer Steuer- und/oder Regeleinheit (26), welche zu einer zumindest teilweisen Kartierung des Arbeitsbereichs (24) vorgesehen ist, wobei die Steuer- und/oder Regeleinheit (26) in einer regulären Betriebsphase (48) dazu vorgesehen ist, das autonome Arbeitsgerät (10) unabhängig von der zumindest einen temporären Markiervorrichtung (14, 14', 14", 16, 16', 16", 18, 18', 18", 20, 20', 20", 21, 21', 21", 22, 22', 22", 23) und abhängig von einem kartierten Arbeitsbereich (24) zu navigieren, **dadurch gekennzeichnet, dass** die zumindest eine Erfassungsvorrichtung (12) zumindest eine Sensoreinheit (28) aufweist, die zu einer Erfassung zumindest einer als Typ der temporären Markiervorrichtung (14, 14', 14", 16, 16', 16", 18, 18', 18", 20, 20', 20", 21, 21', 21", 22, 22', 22", 23) ausgebildeten Kenngröße der zumindest einen temporären Markiervorrichtung (14, 14', 14", 16, 16', 16", 18, 18', 18", 20, 20', 20", 21, 21', 21", 22, 22', 22", 23) vorgesehen ist, wobei die Steuer- und/oder Regeleinheit (26) bei einer Kartierung dazu vorgesehen ist, die Daten der Sensoreinheit (28) der Erfassungsvorrichtung (12) hinsichtlich des Typs der temporären Markiervorrichtung (14, 14', 14", 16, 16', 16", 18, 18', 18", 20, 20', 20", 21, 21', 21", 22, 22', 22") auszuwerten, wobei verschiedenen Typen von temporären Markiervorrichtungen (14, 14', 14", 16, 16', 16", 18, 18', 18", 20, 20', 20", 21, 21', 21", 22, 22', 22", 23) jeweils für die Definition verschiedener Teilbereiche des Arbeitsbereichs vorgesehen sind.

2. Autonomes Arbeitsgerät nach Anspruch 1, **dadurch gekennzeichnet, dass** die zumindest eine Erfassungsvorrichtung (12) zumindest eine Positionserfassungseinheit (30) aufweist, welche zu einer Erfassung einer relativen und/oder absoluten Position des autonomen Arbeitsgeräts (10) vorgesehen ist.

3. System (32) mit zumindest einem autonomen Arbeitsgerät (10) nach einem der vorhergehenden Ansprüche und mit zumindest einer temporären Markiervorrichtung (14, 14', 14", 16, 16', 16", 18, 18', 18", 20, 20', 20",21, 21', 21", 22, 22', 22", 23) gemäß eines Typs der verschiedenen Typen von temporären Markiervorrichtungen (14, 14', 14", 16, 16', 16", 18, 18', 18", 20, 20', 20",21, 21', 21", 22, 22', 22", 23).

4. System nach Anspruch 3, **dadurch gekennzeichnet, dass** die zumindest eine temporäre Markiervorrichtung (23) von einer passiven, kontinuierlichen Markiervorrichtung gebildet ist.

5. System zumindest nach Anspruch 3, **gekennzeichnet durch** zumindest zwei temporäre Markiervorrichtungen (14, 14', 14", 16, 16', 16", 18, 18', 18", 20, 20', 20",21, 21', 21", 22, 22', 22") verschiedenen Typs.

6. System zumindest nach Anspruch 5, **dadurch gekennzeichnet, dass** die temporären Markiervorrichtungen (14, 14', 14", 16, 16', 16", 18, 18', 18", 20, 20', 20",21, 21', 21", 22, 22', 22") als passive oder aktive Landmarken ausgebildet sind.

7. System nach Anspruch 5 bis 6, **dadurch gekennzeichnet, dass** zumindest eine temporäre Markiervorrichtung (14, 14', 14", 16, 16', 16") zumindest eines ersten Typs dazu vorgesehen ist, zu einer temporären Markierung einer virtuellen Grenze (34, 36) eines Arbeitsbereichs (24) des autonomen Arbeitsgeräts (10) temporär auf der virtuellen Grenze (34, 36) positioniert zu werden.

8. System nach einem der Ansprüche 5 bis 7, **dadurch gekennzeichnet, dass** zumindest eine temporäre Markiervorrichtung (18, 18', 18") zumindest eines weiteren Typs dazu vorgesehen ist, zu einer temporären Markierung einer geschlossenen Aussparung (38) innerhalb des Arbeitsbereichs (24) des autonomen Arbeitsgeräts (10) temporär in einem Mittelpunkt der Aussparung (38) positioniert zu werden.

9. System nach einem der Ansprüche 5 bis 8, **dadurch gekennzeichnet, dass** zumindest eine temporäre Markiervorrichtung (20, 20', 20", 21, 21', 21") zumindest eines weiteren Typs dazu vorgesehen ist, zu einer Erweiterung und/oder Einschränkung des Arbeitsbereichs (24) des autonomen Arbeitsgeräts (10) temporär innerhalb eines Erweiterungsbereichs (40) und/oder Einschränkungsbereichs (41) positioniert zu werden.

10. System nach einem der Ansprüche 5 bis 9, **dadurch gekennzeichnet, dass** zumindest eine temporäre Markiervorrichtung (22, 22', 22") zumindest eines weiteren Typs dazu vorgesehen ist, zu einer temporären Markierung einer temporären, geschlossenen Aussparung (42) innerhalb des Arbeitsbereichs (24) des autonomen Arbeitsgeräts (10) temporär in einem Mittelpunkt der temporären Aussparung (42) positioniert zu werden.

11. Verfahren zum Betrieb eines autonomen Arbeitsgeräts (10), nach einem der Ansprüche 1 bis 2, insbesondere zum Betrieb eines Systems (32) nach einem der Ansprüche 3 bis 10, **dadurch gekennzeichnet, dass** in einem initialen Schritt (44) ein Arbeitsbereich (24) des autonomen Arbeitsgeräts (10) mittels zumindest einer temporären Markiervorrichtung (14, 14', 14", 16, 16', 16", 18, 18', 18", 23) definiert wird, in einer darauffolgenden Einlernphase (46) der Arbeitsbereich (24) von dem autonomen Arbeitsgerät (10) selbsttätig kartiert wird und in einer auf die Einlernphase (46) folgenden regulären Betriebsphase (48) frei von materiellen Markierungen navigiert.

12. Verfahren nach Anspruch 11, **dadurch gekennzeichnet, dass** in dem initialen Schritt (44) zu einer Definition des Arbeitsbereichs (24) des autonomen Arbeitsgeräts (10) zumindest eine als Landmarke ausgebildete temporäre Markiervorrichtung (14, 14', 14", 16, 16', 16", 18, 18', 18") in und/oder an dem Arbeitsbereich (24) positioniert wird.

13. Verfahren nach einem der Ansprüche 11 oder 12, **dadurch gekennzeichnet, dass** die zumindest eine temporäre Markiervorrichtung (14, 14', 14", 16, 16', 16", 18, 18', 18") nach der Einlernphase (46) aus dem Arbeitsbereich (24) entfernt wird.

14. Verfahren nach einem der Ansprüche 11 bis 13, **dadurch gekennzeichnet, dass** von einem Bediener während einer regulären Betriebsphase (48) zu einer Erweiterung (40) und/oder Einschränkung (41) des Arbeitsbereichs (24) temporär zumindest eine temporäre Markiervorrichtung (20, 20', 20", 21, 21', 21") in und/oder an dem Arbeitsbereich (24) positioniert wird.

## Claims

1. Autonomous working device (10), in particular autonomous lawnmower, having at least one capture apparatus (12), which is provided for the purpose of capturing a working area (24) which is initially at least approximately defined by means of at least one temporary marking apparatus (14, 14', 14", 16, 16', 16'', 18, 18', 18", 20, 20', 20", 21, 21', 21", 22, 22', 22", 23), and having at least one open-loop and/or closed-loop control unit (26) which is provided for the purpose of at least partially mapping the working area (24), wherein, in a regular operating phase (48), the open-loop and/or closed-loop control unit (26) is intended to navigate the autonomous working device (10) independently of the at least one temporary marking apparatus (14, 14', 14", 16, 16', 16", 18, 18', 18", 20, 20', 20", 21, 21', 21", 22, 22', 22", 23) and on the basis of a mapped working area (24), **characterized in that** the at least one capture apparatus (12) has at least one sensor unit (28) which is provided for the purpose of capturing at least one characteristic variable of the at least one temporary marking apparatus (14, 14', 14", 16, 16', 16", 18, 18', 18", 20, 20', 20", 21, 21', 21", 22, 22', 22", 23), which characteristic variable is designed as the type of the temporary marking apparatus (14, 14', 14", 16, 16', 16", 18, 18', 18", 20, 20', 20", 21, 21', 21", 22, 22', 22'', 23), wherein, during mapping, the open-loop and/or closed-loop control unit (26) is intended to evaluate the data from the sensor unit (28) of the capture apparatus (12) with regard to the type of the temporary marking apparatus (14, 14', 14'', 16, 16', 16'', 18, 18', 18", 20, 20', 20", 21, 21', 21", 22, 22', 22"), wherein different types of temporary marking apparatuses (14, 14', 14", 16, 16', 16", 18, 18', 18", 20, 20', 20", 21, 21', 21", 22, 22', 22", 23) are respectively provided for defining different sections of the working area.

2. Autonomous working device according to Claim 1, **characterized in that** the at least one capture apparatus (12) has at least one position capture unit (30) which is provided for the purpose of capturing a relative and/or absolute position of the autonomous working device (10) .

3. System (32) having at least one autonomous working device (10) according to one of the preceding claims and having at least one temporary marking apparatus (14, 14', 14", 16, 16', 16", 18, 18', 18", 20, 20', 20", 21, 21', 21", 22, 22', 22", 23) according to one type of the various types of temporary marking apparatuses (14, 14', 14", 16, 16', 16", 18, 18', 18", 20, 20', 20", 21, 21', 21", 22, 22', 22", 23).

4. System according to Claim 3, **characterized in that** the at least one temporary marking apparatus (23) is formed by a passive, continuous marking apparatus.

5. System at least according to Claim 3, **characterized by** at least two temporary marking apparatuses (14, 14', 14", 16, 16', 16", 18, 18', 18", 20, 20', 20", 21, 21', 21", 22, 22', 22'') of different types.

6. System at least according to Claim 5, **characterized in that** the temporary marking apparatuses (14, 14', 14", 16, 16', 16", 18, 18', 18", 20, 20', 20", 21, 21', 21", 22, 22', 22") are in the form of passive or active landmarks.

7. System according to Claims 5 to 6, **characterized in that** at least one temporary marking apparatus (14, 14', 14", 16, 16', 16") of at least one first type is intended to be temporarily positioned on a virtual boundary (34, 36) of a working area (24) of the autonomous working device (10) in order to temporarily mark the virtual boundary (34, 36).

8. System according to one of Claims 5 to 7, **characterized in that** at least one temporary marking apparatus (18, 18', 18'') of at least one further type is intended to be temporarily positioned in a centre of a closed recess (38) inside the working area (24) of the autonomous working device (10) in order to temporarily mark the recess (38).

9. System according to one of Claims 5 to 8, **characterized in that** at least one temporary marking apparatus (20, 20', 20", 21, 21', 21'') of at least one further type is intended to be temporarily positioned within an expansion area (40) and/or a restriction area (41) in order to expand and/or restrict the working area (24) of the autonomous working device (10).

10. System according to one of Claims 5 to 9, **characterized in that** at least one temporary marking apparatus (22, 22', 22") of at least one further type is intended to be temporarily positioned in a centre of a temporary closed recess (42) within the working area (24) of the autonomous working device (10) in order to temporarily mark the temporary recess (42).

11. Method for operating an autonomous working device (10) according to one of Claims 1 to 2, in particular for operating a system (32) according to one of Claims 3 to 10, **characterized in that,** in an initial step (44), a working area (24) of the autonomous working device (10) is defined by means of at least one temporary marking apparatus (14, 14', 14", 16, 16', 16", 18, 18', 18", 23), in a subsequent learning phase (46), the working area (24) is automatically mapped by the autonomous working device (10) and, in a regular operating phase (48) following the learning phase (46), navigates in a manner free of material markings.

12. Method according to Claim 11, **characterized in that,** in the initial step (44) for defining the working area (24) of the autonomous working device (10), at least one temporary marking apparatus (14, 14', 14", 16, 16', 16", 18, 18', 18") in the form of a landmark is positioned in and/or at the working area (24).

13. Method according to either of Claims 11 and 12, **characterized in that** the at least one temporary marking apparatus (14, 14', 14", 16, 16', 16", 18, 18', 18") is removed from the working area (24) after the learning phase (46).

14. Method according to one of Claims 11 to 13, **characterized in that,** during a regular operating phase (48), an operator temporarily positions at least one temporary marking apparatus (20, 20', 20", 21, 21', 21") in and/or at the working area (24) in order to expand (40) and/or restrict (41) the working area (24).

## Revendications

1. Engin de travail autonome (10), en particulier tondeuse à gazon autonome, comprenant au moins un dispositif de détection (12) qui est prévu pour détecter une zone de travail (24) initialement définie au moins approximativement au moyen d'au moins un dispositif de marquage temporaire (14, 14', 14", 16, 16', 16", 18, 18', 18", 20, 20', 20", 21, 21', 21", 22, 22', 22", 23), et comprenant au moins une unité de commande et/ou de régulation (26) qui est prévue pour cartographier au moins partiellement la zone de travail (24), dans lequel, dans une phase de fonctionnement normale (48), l'unité de commande et/ou de régulation (26) est prévue pour piloter l'engin de travail autonome (10) indépendamment du au moins un dispositif de marquage temporaire (14, 14', 14", 16, 16', 16", 18, 18', 18", 20, 20', 20", 21, 21', 21", 22, 22', 22", 23) et en fonction d'une zone de travail (24) cartographiée,
**caractérisé en ce que** ledit au moins un dispositif de détection (12) présente au moins une unité de capteur (28) qui est prévue pour détecter au moins une grandeur caractéristique, réalisée sous la forme d'un type du dispositif de marquage temporaire (14, 14', 14", 16, 16', 16", 18, 18', 18", 20, 20', 20", 21, 21', 21", 22, 22', 22", 23), du au moins un dispositif de marquage temporaire (14, 14', 14", 16, 16', 16", 18, 18', 18", 20, 20', 20", 21, 21', 21", 22, 22', 22", 23), dans lequel, lors d'une opération de cartographie, l'unité de commande et/ou de régulation (26) est prévue pour évaluer les données de l'unité de capteur (28) du dispositif de détection (12) quant au type du dispositif de marquage temporaire (14, 14', 14", 16, 16', 16", 18, 18', 18", 20, 20', 20", 21, 21', 21", 22, 22', 22"), dans lequel différents types de dispositifs de marquage temporaire (14, 14', 14", 16, 16', 16", 18, 18', 18", 20, 20', 20", 21, 21', 21", 22, 22', 22", 23) sont prévus respectivement pour la définition de différentes zones partielles de la zone de travail.

2. Engin de travail autonome selon la revendication 1, **caractérisé en ce que** ledit au moins un dispositif de détection (12) présente au moins une unité de détection de position (30) qui est prévue pour détecter une position relative et/ou absolue de l'engin de travail autonome (10).

3. Système (32) comprenant au moins un engin de travail autonome (10) selon l'une quelconque des revendications précédentes et comprenant au moins un dispositif de marquage temporaire (14, 14', 14", 16, 16', 16", 18, 18', 18", 20, 20', 20", 21, 21', 21", 22, 22', 22", 23) selon un type des différents types de dispositifs de marquage temporaire (14, 14', 14", 16, 16', 16", 18, 18', 18", 20, 20', 20", 21, 21', 21", 22, 22', 22", 23).

4. Système selon la revendication 3, **caractérisé en ce que** ledit au moins un dispositif de marquage temporaire (23) est formé par un dispositif de marquage continu passif.

5. Système au moins selon la revendication 3, **caractérisé par** au moins deux dispositifs de marquage temporaire (14, 14', 14", 16, 16', 16", 18, 18', 18", 20, 20', 20", 21, 21', 21", 22, 22', 22") de type différent.

6. Système au moins selon la revendication 5, **caractérisé en ce que** les dispositifs de marquage temporaire (14, 14', 14", 16, 16', 16", 18, 18', 18", 20, 20', 20", 21, 21', 21", 22, 22', 22") sont réalisés sous la forme de points de repère passifs ou actifs.

7. Système selon la revendication 5 à 6, **caractérisé en ce qu'**en vue d'un marquage temporaire d'une limite virtuelle (34, 36) d'une zone de travail (24) de l'engin de travail autonome (10), au moins un dispositif de marquage temporaire (14, 14', 14", 16, 16', 16") au moins d'un premier type est prévu pour être positionné temporairement sur la limite virtuelle (34, 36).

8. Système selon l'une quelconque des revendications 5 à 7, **caractérisé en ce qu'**en vue d'un marquage temporaire d'une réserve fermée (38) à l'intérieur de la zone de travail (24) de l'engin de travail autonome (10), au moins un dispositif de marquage temporaire (18, 18', 18") au moins d'un autre type est prévu pour être positionné temporairement au centre de la réserve (38) .

9. Système selon l'une quelconque des revendications 5 à 8, **caractérisé en ce qu'**en vue d'un élargissement et/ou d'une restriction de la zone de travail (24) de l'engin de travail autonome (10), au moins un dispositif de marquage temporaire (20, 20', 20", 21, 21', 21") au moins d'un autre type est prévu pour être positionné temporairement à l'intérieur d'une zone d'élargissement (40) et/ou d'une zone de restriction (41) .

10. Système selon l'une quelconque des revendications 5 à 9, **caractérisé en ce qu'**en vue d'un marquage temporaire d'une réserve fermée temporaire (42) à l'intérieur de la zone de travail (24) de l'engin de travail autonome (10), au moins un dispositif de marquage temporaire (22, 22', 22") au moins d'un autre type est prévu pour être positionné temporairement au centre de la réserve temporaire (42).

11. Procédé permettant de faire fonctionner un engin de travail autonome (10) selon l'une quelconque des revendications 1 à 2, en particulier pour faire fonctionner un système (32) selon l'une quelconque des revendications 3 à 10, **caractérisé en ce que** dans une étape initiale (44), une zone de travail (24) de l'engin de travail autonome (10) est définie au moyen d'au moins un dispositif de marquage temporaire (14, 14', 14", 16, 16', 16", 18, 18', 18", 23), dans une phase d'apprentissage consécutive (46), la zone de travail (24) est cartographiée automatiquement par l'engin de travail autonome (10), et dans une phase de fonctionnement normale (48) consécutive à la phase d'apprentissage (46), parcourt sans marquages matériels.

12. Procédé selon la revendication 11, **caractérisé en ce que** dans l'étape initiale (44), en vue d'une définition de la zone de travail (24) de l'engin de travail autonome (10), au moins un dispositif de marquage temporaire (14, 14', 14", 16, 16', 16", 18, 18', 18") réalisé sous la forme d'un point de repère est positionné dans et/ou près de la zone de travail (24) .

13. Procédé selon l'une quelconque des revendications 11 ou 12, **caractérisé en ce que** ledit au moins un dispositif de marquage temporaire (14, 14', 14", 16, 16', 16", 18, 18', 18") est retiré de la zone de travail (24) après la phase d'apprentissage (46).

14. Procédé selon l'une quelconque des revendications 11 à 13, **caractérisé en ce qu'**en vue d'un élargissement (40) et/ou d'une restriction (41) de la zone de travail (24), un opérateur positionne temporairement pendant une phase de fonctionnement normale (48) au moins un dispositif de marquage temporaire (20, 20', 20", 21, 21', 21") dans et/ou près de la zone de travail (24).
